Europäisches Patentamt

European Patent Office

Office européen des brevets

(11) Veröffentlichungsnummer: **0 229 643**
**A2**

## (12) EUROPÄISCHE PATENTANMELDUNG

(21) Anmeldenummer: **87100184.8**

(22) Anmeldetag: **09.01.87**

(51) Int. Cl.³: **F 02 P 5/15**

(30) Priorität: **16.01.86 DE 3601096**

(43) Veröffentlichungstag der Anmeldung:
**22.07.87 Patentblatt 87/30**

(84) Benannte Vertragsstaaten:
**ES FR GB IT**

(71) Anmelder: **Atlas Fahrzeugtechnik GmbH**
**Gewerbestrasse 20**
**D-5980 Werdohl(DE)**

(72) Erfinder: **Klüppel, Klemens**
**Borketalstrasse 35**
**D-5982 Neuenrade 5(DE)**

(72) Erfinder: **Stübs, Albert**
**Am Weiten Blick 35**
**D-5880 Lüdenscheid(DE)**

(74) Vertreter: **Hassler, Werner, Dr.**
**Postfach 17 04 Asenberg 62**
**D-5880 Lüdenscheid(DE)**

(54) **Zündsystem für einen Verbrennungsmotor.**

(57) Ein Zündsystem für einen Verbrennungsmotor mit folgemdem Aufbau: ein Impulsgeber erzeugt synchron mit der Kurbelwellendrehung Winkelimpulse und einen Bezugsimpuls; zur Bestimmung eines Drehzahlwertes werden Taktimpulse während einer Zeitbasis in einem Drehzahlzähler gezählt; entsprechend dem Drehzahlwert und einem digitalisierten Lastwert wird ein Festwerte speichernder Kennfeldspeicher abgefragt; in Abhängigkeit von den Speicherwerten des Kennfeldspeichers wird ein Zündzähler voreingestellt, der durch Zählung von Winkelimpulsen einen Schaltimpuls für das Zündsignal abgibt; der Drehzahlwert und der Lastwert werden am Ende der Zeitbasis in Zwischenspeichern gespeichert; der Kennfeldspeicher enthält Mehrbitzündwerte zur Festlegung des Zündwinkels; zu einem vorgegebenen Winkelwert wird der voreinstellbare Zündzähler mit dem jeweiligen Mehrbitzündwert vorgeladen. Das technische Problem ist die Bereitstellung eines Zündsystems, das eine hohe Auswertegeschwindigkeit hat, so daß innerhalb der zur Verfügung stehenden Zeiten auch bei hohen Drehzahlen eine sichere Bestimmung des Zündwertes unter Berücksichtigung der erforderlichen Korrekturgrößen möglich ist. Die Winkelimpulse werden als Taktimpulse verwendet. Ein ebenfalls Festwerte speichernder Korrekturfeldspeicher enthält Mehrbitkorrekturwerte in Temperatur/Last/Drehzahlkennfeldern und/oder Oktan/Lastkennfeldern. Während eines anschließenden Korrekturwinkelabschnitts wird der Zählstand des Zündzählers durch die Mehrbitkorrekturwerte additiv oder subtraktiv korrigiert. Bei einem vorgegebenen Winkelwert wird der Zündzähler freigegeben, die Winkelimpulse werden bis zum Überlauf gezählt und der Überlaufimpuls löst als Schaltimpuls die Zündung aus.

EP 0 229 643 A2

.../...

Croydon Printing Company Ltd.

Patentanwalt

Asenberg 62

D-5880 Lüdenscheid (DE)

−1−

8. Januar 1987

**0229643**

A 86 167

Anmelderin: Atlas Fahrzeugtechnik GmbH

Eggenpfad 26

D-5980 Werdohl (DE)

## Zündsystem für einen Verbrennungsmotor

### Beschreibung

Die Erfindung betrifft ein Zündsystem für einen Verbrennungsmotor mit folgemdem Aufbau:

a) ein Impulsgeber erzeugt synchron mit der Kurbelwellendrehung Winkelimpulse und einen Bezugsimpuls;

b) innerhalb eines ersten Winkelabschnitts der Kurbelwellendrehung werden zur Bestimmung eines Drehzahlwertes Taktimpulse während einer Zeitbasis in einem Drehzahlzähler gezählt und gleichzeitig wird ein Lastwert in einen Mehrbitwert umgewandelt;

c) entsprechend dem Drehzahlwert und dem Lastwert wird ein Festwerte speichernder Kennfeldspeicher abgefragt;

d) in Abhängigkeit von den Speicherwerten des Kennfeldspeichers wird ein Zündzähler voreingestellt, der durch Zählung von Winkelimpulsen einen Schaltimpuls für das Zündsignal abgibt;

e) der Drehzahlwert und der Lastwert werden am Ende der Zeitbasis in Zwischenspeichern gespeichert;

f) der Kennfeldspeicher enthält Mehrbitzündwerte zur Festlegung des Zündwinkels;

g) zu einem vorgegebenen Winkelwert wird der voreinstellbare Zündzähler mit dem jeweiligen Mehrbitzündwert vorgeladen.

Ein Zündsystem der genannten Art ist sowohl für Verbrennungsmotoren mit Fremdzündung (Ottomotoren) als für Verbrennungsmotoren mit Selbstzündung (Dieselmotoren) geeignet. In ersterem Fall ist das Zündsignal das Spannungssignal für die Zündkerze, im letzteren Fall ist das Zündsignal das Auslösesignal für die Einspritzpumpe.

Bei einem bekannten Zündsystem ist das Zündkennfeld in einem groben Drehzahlraster und Lastraster gespeichert. Der jeweilige Zündwinkel wird durch Übertragung der gespeicherten Werte des Zündkennfeldes in einen Mikroprozessor und durch Interpolationsrechnung gewonnen. Dieses Zündsystem kommt an zeitliche Grenzen, weil bei hohen Drehzahlen die Berechnungen nicht in der zur Verfügung stehenden Zeit durchgeführt werden können. Dies gilt vor allem dann, wenn zusätzliche Korrekturen des Zündwertes in Abhängigkeit von der Temperatur und/oder der Kraftstoffzusammensetzung, insbesondere der Oktanzahl erfolgen sollen.

Ein Zündsystem der eingangs genannten Art ist in der DE-OS 28 45 024 beschrieben. Eine Berücksichtigung weiterer Kenngrößen ist hier nicht vorgesehen. Es zeigt sich jedoch, daß ein Grundkennfeld allein keinen optimalen Motorbetrieb ermöglicht.

Die DE-OS 31 16 593 sieht die Anpassung eines fest abgespeicherten Grundkennfeldes an spezifische Motordaten dadurch vor, daß entsprechend dem individuellen Motor korrigierte Zündwerte in einem Korrekturfeldspeicher abgespeichert werden, der als Schreib-Lese-Speicher ausgebildet ist. Dieses an einen spezifischen Motor angepaßte Korrekturkennfeld wird dann als Kennfeld ausgewertet. Eine Anpassung der Speicherwerte an Motorkenngrößen ist hier nicht vorgesehen.

Aufgabe der Erfindung ist die Bereitstellung eines Zündsystems, das eine hohe Auswertegeschwindigkeit hat, so daß innerhalb der zur Verfügung stehenden Zeiten auch bei hohen Drehzahlen eine sichere Bestimmung des Zündwertes unter Berücksichtigung der erforderlichen Korrekturgrößen möglich ist.

Diese Aufgabe wird bei einem Zündsystem der eingangs genannten Art durch folgende Merkmale gelöst;

h) die Winkelimpulse werden als Taktimpulse verwendet;

i) ein ebenfalls Festwerte speichernder Korrekturfeldspeicher enthält Mehrbitkorrekturwerte in Temperatur/Last/Drehzahlkennfeldern und/oder Oktan/Lastkennfeldern;

j) während eines anschließenden Korrekturwinkelabschnitts wird der Zählstand des Zündzählers durch die Mehrbitkorrekturwerte additiv oder subtraktiv korrigiert;

k) bei einem vorgegebenen Winkelwert wird der Zündzähler freigegeben, die Winkelimpulse werden bis zum Überlauf gezählt und der Überlaufimpuls löst als Schaltimpuls die Zündung aus.

Das Zündsystem nach der Erfindung unterscheidet sich insofern vom Stand der Technik, als für ein vollständiges Zündkennfeld in Speicherplätzen die jeweiligen Zündwerte und Korrekturwerte als Mehrbitwerte in einem Festewertspeicher (ROM) gespeichert sind. Wenn man bei-

- 3 -

spielsweise eine Winkelauflösung von 1° Kubelwellendrehung wünscht, so benötigt man 8-Bit-Zündwerte. Diese 8-Bit-Zündwerte können unmittelbar in dem Kennfeldspeicher abgespeichert werden. Man kann außerdem die Drehzahlinkremente und die Lastinkremente des Kennfeldes in der erforderlichen Kleinheit festlegen. Man kann bei bestimmten Drehzahlen eine kleinere oder größere Drehzahlabstufung vorsehen, um dort eine benötigte höhere Auflösung zu erhalten. Außerdem kann man mit dem Zündsystem nach der Erfindung gerade im Bereich niedriger Drehzahlen Kennlinien hoher Steilheit verwirklichen.

Die Korrektur des Mehrbitzündwertes dient zur Berücksichtigung der Motortemperatur, insbesondere der Kühlwassertemperatur und/oder der Ladelufttemperatur. Außerdem kann eine Korrektur in Abhängigkeit von der Kraftstoffzusammensetzung, insbesondere in Abhängigkeit von dem Oktanwert, erfolgen. Diese Korrekturwerte werden speziellen Korrekturkennfeldern entnommen. Es hat sich gezeigt, daß für diese Korrekturkennfelder eine grobe Rasterung der Drehzahlinkremente und der Lastinkremente ausreichend ist. Korrekturwerte werden während eines Winkelabschnitts einer Kurbelwellendrehung vorzeichenrichtig zu dem jeweiligen Mehrbitzündwert innerhalb des Zündzählers addiert, so daß man einen korrigierten Zündwert erhält, der dann bei dem vorgegebenen Winkelwert bereitsteht, zu dem der Zündzähler freigegeben wird.

Zur Berücksichtigung weiterer Betriebsparameter ist vorgesehen, daß während des ersten Winkelabschnitts simultan Ansaugdruckwerte, Kühlwassertemperaturwerte und/oder Lufttemperaturwerte in Digitalwerte gewandelt und zwischengespeichert werden.

Korrekturen des Grundkennfeldes erfolgen dadurch, daß das Korrekturkennfeld in grobem Raster temperaturabhängig und parameterabhängig Drehzahl-Lastkennfelder enthält. Durch äußere Komponenten kann über den Korrekturzähler der Zündzeitpunkt zusätzlich variiert werden.

Eine Auswertung während jeder Kurbelwellendrehung ist auch bei hohen Drehzahlen dadurch sichergestellt, daß eine Multiplexabfrage der Kennfelder erfolgt.

Eine schnelle Korrektur ist dadurch sichergestellt, daß die Mehrbitkorrekturwerte während des Korrekturwinkelabschnitts vorzeichenrichtig mit hoher Frequenz in den Zündzähler eingegeben werden.

Bei einem Ottomotor mit Spulenzündung muß die Schließzeit überwacht werden, um bei niedrigen Drehzahlen die Belastung der Zündspule möglichst gering zu halten. Hierfür sieht die Erfindung vor, daß eine Spulenstrommeßschaltung an Eingängen eines drehzahlabhängigen Schließzeitkennfeldes anliegt und daß Mehrbitschließzeitwerte des Schließ-zeitkennfeldes einen Schließzeitzähler beaufschlagen. Nach der Erfindung ist der Schließzeitzähler in das Zündsystem voll integriert.

Unmittelbar im Anschluß an jeden Zündimpuls wird die Schließzeit dadurch bestimmt, daß der Schließzeitzähler durch den Schaltimpuls vorgeladen und freigegeben wird und Winkelimpulse zählt und daß er bei Erreichen eines Überlaufwertes einen Impuls für den Spulenstrom abgibt.

Eine Ausführungsform der Erfindung wird im folgenden unter Bezugnahme auf die anliegende Zeichnung erläutert, die ein Blockschaltbild des Zündsystems darstellt.

Das Zündsystem umfaßt eine Auswerteschaltung 1, die im einzelnen noch zu beschreibende logische Schaltstufen, Zähler und Zwischenspeicher enthält, und eine Speichereinheit 2, die als Festwertspeicher (ROM) ausgebildet und in der Grundwerte sowie verschiedene Kennfelder gespeichert sind. Oberhalb der Auswerteschaltung 1 sind für die Eingangswerte und Ausgangswerte Interfaceschaltungen erkennbar.

Die Eingänge umfassen ein Zahnkranzinterface 3, das von der Kurbelwelle bzw. von einem mit der Kurbelwelle gekoppelten Zahnkranz Zahnimpulse ableitet. Die Schaltung 4 stellt die Betriebsspannung bereit und stellt beim Einschalten des Systems alle Zähler in Grundstellung. Ein Oszillator 5 liefert Taktimpulse. Ein Drosselklappenschalter 6 liefert ein Signal für die Stellung der Drosselklappe, um damit bei bestimmten Drosselklappenstellungen den Zündwinkel entsprechend zu beeinflussen. Ein Druckinterface 7 mißt den Druck im Ansaugrohr. Die Motortemperatur, insbesondere Kühlwassertemperatur, wird in der Schaltung 8 erfaßt. Die Schaltung 9 erfaßt die Ladelufttemperatur. Der Schalter 10 ermöglicht von Hand eine Einstellung des Oktanwertes oder einer anderen Kenngröße der Kraftstoffzusammensetzung in mehreren digitalen Stufen. Eine Strommeßschaltung 11 mißt den durch die jeweilige Zündspule fließenden Strom.

Die Ausgangsgrößen werden in folgenden Interfaceschaltungen bereitgestellt: Eine Schaltung 12 gibt den Drehzahlwert an den Drehzahlmesser weiter. Endstufen 13, 14, 15 liefern den jeweiligen Strom für die Zündspulen. Die Zahl der Endstufen hängt von der Zahl der Zylinder des Verbrennungsmotors ab. Bei mechanischer Verteilung ist nur eine Endstufe erforderlich. Schließlich ist eine Interfaceschaltung 16 für die Schubabschaltung vorhanden.

Die Auswerteschaltung 1 kann ein vollintegrierter Baustein sein, der die erforderlichen logischen Schaltstufen, Zwischenspeicher und Zählschaltungen enthält. Im einzelnen werden die Eingangssignale gruppenweise ausgewertet, wie dies im folgenden erläutert wird.

Das Zahnkranzinterface 3 stellt Zahnimpulse zur Verfügung, deren Anzahl pro Kurbelwellenumdrehung von der Zähnezahl des Zahnkranzes, z.B. des Anlasserzahnkranzes, abhängt. Diese Zähnezahl ist bei verschiedenen Verbrennungsmotoren unterschiedlich. Zweckmäßig ist es jedoch, wenn man Winkelimpulse mit gleichem Inkrement bereitstellt, damit das Zündsystem bei allen Verbrennungsmotoren gleich aufgebaut sein kann. Besonders zweckmäßig ist es, die Winkelimpulse mit einem Inkrement von 1° Kurbelwellendrehung bereitzustellen, so daß pro Kurbelwellenumdrehung 360 Impulse zur Verfügung stehen. Zur Anpassung der Impulsfrequenz ist ein Oszillator 17 mit hoher Frequenz vorgesehen, der durch die Zahnimpulse gesteuert wird. In einem Vervielfacher 18 werden durch entsprechende Vervielfachung der Zahnimpulse Winkelimpulse abgeleitet. Die Winkelimpulse treten z.B. mit einem Winkelabstand von 1° Kurbelwellenumdrehung auf. Außerdem erfolgt in dem Vervielfacher 18 die Erkennung eines Bezugsimpulses, der den Grundwinkelwert festlegt.

Eine Steuerstufe 19 gibt bei bestimmten Winkelwerten Schaltsignale ab, um bei bestimmten Winkelwerten oder innerhalb bestimmter Winkelabschnite die jeweiligen Arbeitsvorgänge auszulösen. Die Ausgangssignale der Steuerstufe 19 beaufschlagen über ein Leitungsbündel 20 die entsprechenden Eingänge, insbesondere Übertragseingänge der jeweiligen Zwischenspeicher und Zähler. Diese Steuereingänge sind im einzelnen nicht dargestellt.

Der Oszillator 5 wirkt mit einer Impulsstufe 21 zusammen. Die Taktimpulse der Impulsstufe 21 werden in einem Zeitbasiszähler 22 gezählt, so daß die Freigabe des Zeitbasiszählers 22 jeweils eine Zeitbasis bereitstellt. Der Zeitbasiszähler 22 gibt einen Drehzahlzähler 23 frei, der innerhalb eines entsprechenden Winkelabschnitts jeder Kurbelwellendrehung während der vorgegebenen Zeitbasis die Winkelimpulse zählt. Der so erhaltene Zählwert des Drehzahlzählers 23 ist der Drehzahl des Verbrennungsmotors direkt proportional und also ein Maß für die Drehzahl. Der Zählwert des Drehzahlzählers 23 wird nach Ablauf der Zeitbasis in einem Zwischenspeicher 24 gespeichert. Der Ausgang des Zwischenspeichers 24 liegt an einem Multiplexer 25 an, der unter entsprechender Taktsteuerung durch die Steuerstufe 19 den Zwischenspeicher 24 abfragt und den Speicherwert an die Speichereinheit 2 weitergibt.

Die Stellung des Drosselklappenschalters 6 wird in einer Polaritätsstufe 26 erkannt, deren Ausgangssignal in entsprechenden Fahrzuständen die Druckauswertung beeinflußt. Der Saugrohrunterdruck steht an dem Druckinterface 7 als Analogwert zur Verfügung. Dieser Analogwert für den Druck wird in eine Verzögerungsstufe 27 mit einstellbarer Verzögerung eingegeben. Die Verzögerung dieser Verzögerungsstufe 27 wird parameterabhängig verändert. Diese Parameter berücksichtigen eine Vielzahl von Betriebszuständen des Motors, wie Beschleunigung, Verzögerung, Drehzahl, Last, Schiebebetrieb, Motortemperatur und dergleichen. Durch entsprechende Einstellung der Verzögerung der Verzögerungsstufe 27 wird die Ansprechzeit auf eine Druckänderung beeinflußt, um so das Fahrverhalten des Verbrennungsmotors zu verbessern. Die Steuergröße für die Verzögerungsstufe 27 wird in einer Schaltstufe 28 erzeugt. Das Ausgangssignal der Verzögerungsstufe 27 liegt an einem Multiplexer 29 an. Dem Multiplexer 29 ist ein A/D-Wandler 30 nachgeschaltet, der die Analogwerte in Digitalwerte umwandelt. Der Druckwert wird in einem Zwischenspeicher 31 und 32 gespeichert. Ein Multiplexer 33 fragt den Zwischenspeicher 32 ab. Der Druckwert aus dem Zwischenspeicher 31 wird mit dem Zählwert des Drehzahlzählers 23 kombiniert und in einem weiteren Zwischenspeicher 34 und 35 festgehalten. Der Zwischenspeicher 35 hält einen kombinierten Mehrbitwert für die Last und die Drehzahl des Verbrennungsmotors zur Verfügung. Dieser kombinierte Wert dient für die notwendigen Korrekturen.

Die Schaltung 8 stellt eine Analogspannung der Motortemperatur bereit, die über den Multiplexer 29 in dem A/D-Wandler 30 in einen Digitalwert umgewandelt wird. Dieser wird an die Zwischenspeicher 36, 37 weitergegeben. Entsprechend wird ein von der Schaltung 9 bereitgestelltes Signal für die Ladelufttemperatur über den Multiplexer 29 in dem A/D-Wandler 30 in einen Digitalwert umgewandelt und in den Zwischenspeicher 38 und 39 bereitgehalten.

Der in dem Schalter eingestellte Oktanwert wird in einen Zwischenspeicher 40 übertragen. Ferner ist ein Zwischenspeicher 41 für den Spulenstrom vorgesehen. Der Spulenstrom der Zündspule wird bei jeder Zündung in der Strommeßschaltung 11 erfaßt und in einer Vergleicherschaltung 42 mit einem Einstellwert verglichen. Je nach dem Ergebnis des Vergleichs wird der Einstellwert einer Einstellstufe 43 geändert. Dieser Wert wird in dem Zwischenspeicher 41 bereitgehalten. Die Bestimmung und Digitalwandlung dieser Werte erfolgt simultan während der Zeitbasis.

Die Speichereinheit 2 enthält ein Grundkennfeld 44, das in Drehzahlinkremente und Lastinkremente unterteilt ist. In dem durch die Drehzahlinkremente und die Lastinkremente gekennzeichneten Speicherplätze sind Mehrbitzündwerte gespeichert, die den Zündwinkel in Grad Kurbelwelle festlegen. Normalerweise genügt hierfür ein 8-Bitwert. Die Anzahl der Drehzahlinkremente richtet sich nach der gewünschten Auflösung und nach der verfügbaren Speicherkapazität. Man kann z.B. 256 Drehzahlinkremente und 64 Lastinkremente vorsehen. Insbesondere ist es auch möglich, bei bestimmten Drehzahlen eine kleinere Drehzahlabstufung vorzusehen, um so die benötigte Auflösung zu verbessern.

Außerdem enthält die Speichereinheit 2 mehrere Korrekturkennfelder 45, die nach vergleichsweise grobgestuften Drehzahlinkrementen geordnet sind. Man kann etwa 16 Korrekturkennfelder für unterschiedliche Temperaturwerte, insbesondere unterschiedliche Ladeluftwerte und Motortemperaturwerte, vorsehen. Außerdem ist ein Korrekturkennfeld 46 für den Oktanwert vorgesehen. Schließlich enthält die Speichereinheit 2 ein Schließzeitkennfeld 47, das in Abhängigkeit von Drehzahlinkrementen und Stromwerten Mehrbitschließzeitwerte für die Schließzeit t enthält.

Diese Kennfelder werden nach der Multiplextechnik abgefragt. Zunächst wird das Grundkennfeld 44 abgefragt.

Die Mehrbitwerte werden in den Auslöseteil der Auswerteschaltung 1 übertragen. Dort ist ein Zündzähler 43 vorgesehen, in den der jeweiligen Mehrbitzündwert als Grundzündwert und Voreinstellwert übertragen wird. Dem Zündzähler 48 ist ein Korrekturzähler 49 zugeordnet, der die Mehrbitwerte der Korrekturkennfelder übernimmt. Diese Korrekturwerte können mit hoher Zählfrequenz in den Zündzähler 48 vorzeichenrichtig, d.h. additiv oder subtraktiv übertragen werden. Der Zündzähler 48 wird bei einem bestimmten Winkelwert freigegeben und von den Winkelimpulsen beaufschlagt. Bei Erreichen des Überlaufwertes wird ein Schaltimpuls in einen Abstandzähler 50 übertragen. Der Abstandzähler 50 erzeugt Schaltimpulse entsprechend der Zylinderzahl des Verbrennungsmotors. Denn der Zündzähler 48 erzeugt bei jeder Kurbelwellenumdrehung nur einen Schaltimpuls. Dem Abstandzähler 50 ist ein Verteiler 51 nachgeschaltet, der die Schaltimpulse auf die Schließzeitzähler 52, 53, 54 verteilt. Bei einem Sechszylindermotor mit vollelektronischer Verteilung sind drei Schließzeitzähler erforderlich. Ein Zwischenspeicher hält den jeweiligen Mehrbitschließzeitwert fest, so daß derselbe als Voreinstellwert für den jeweiligen Schließzeitzähler 52, 53, 54 abgefragt werden kann. Das jeweilige Ausangssignal eines Schließzeitzählers 52, 53, 54 liegt an der Endstufe 13, 14, 15 an, die jeweils den Strom für die Zündspule bereitstellt. Schließlich ist eine Stufe 56 für die Schubabschaltung vorgesehen.

Die Arbeitsweise des Zündsystems ist folgende: Ausgehend von dem Zahnkranzinterface werden in dem Vervielfacher 18 einerseits Winkelimpulse und andererseits ein Bezugsimpuls für einen Bezugswinkelwert der Kurbelwellenumdrehung erzeugt. Diese Winkelimpulse steuern das gesamte Zündsystem.

Eine Kurbelwellenumdrehung ist in verschiedene Winkelabschnitte unterteilt, während der die verschiedenen Auswertungen vorgenommen werden müssen, damit während jeder Kurbelwellenumdrehung ein Schaltsignal für ein Schaltimpuls für das Zündsignal bereitgestellt werden kann. Grundsätzlich läßt sich die Kurbelwellenumdrehung in folgende Winkelabschnitte einteilen:

Winkelwert 0          Bezugswinkel
Winkelabschnitt a     Eingabe von Grundwerten
Winkelabschnitt b     Ermittlung des Drehzahlwertes während der Zeitbasis, A/D-Wandlung der Druck- und Temperaturwerte
Winkelwert c          Übertrag des Grundzündwertes in den Zündzähler
Winkelwert d          Schließzeitspeicherung
Winkelabschnitt e     Korrektur des Grundzündwertes
Winkelwert f          Freigabe des Zündzählers, anschließend Erzeugung des Schaltimpulses für das Zündsignal und Vorladung sowie Freigabe des Schließzeitzählers.

Im Anschluß an den Bezugswinkel 0 werden während eines Winkelabschnitts a Grundwerte in die Auswerteschaltung eingegeben. Diese sind systemabhängig.

Während des Zeitabschnitts b wird der Drehzahlwert ermittelt und die Druckwerte werden in Digitalwerte umgewandelt. Diese Werte stehen in den Zwischenspeichern 24, 35, 32, 37, 39 bereit. Durch eine Multiplexabfrage werden diese Werte als Eingangsadressen in die Speichereinheit 2 übertragen. Beim Winkelwert c wird der Grundzündwert des Grundkennfeldes 44 in den Zündzähler 48 als Voreinstellwert übertragen.

Beim Winkelwert d wird der Schließzeitwert des Schließzeitkennfeldes in den Zischenspeicher 55 übertragen. Die Korrekturwerte der Korrekturkennfelder 45 und 46 werden während des Winkelabschnitts e in den Korrekturzähler 49 übertragen und mit einer hohen Taktfrequenz vorzeichenrichtig an den Zündzähler 48 weitergegeben, so daß dadurch der Grundzündwert und der Voreinstellwert korrigiert wird.

Beim Winkelwert f wird der Zündzähler 48 freigegeben, so daß die Winkelimpulse gezählt werden. Beim Erreichen des Überlaufwertes des Zündzählers 48 wird ein Schaltimpuls zur Erzeugung des Zündsignals abgegeben. Der Schaltimpuls erregt den Abstandzähler 50 und wird über den Verteiler 51 in den entsprechenden Schließzeitzähler eingegeben. Dadurch wird das Ausgangssignal des jeweiligen Schließzeitzählers abgeschaltet, so daß der Spulenstrom unterbrochen wird. Damit wird ein Zündsignal ausgelöst.

Außerdem wird der jeweilige Schließzeitzähler 52, 53 bzw. 54 voreladen und freigegeben. Der Zwischenspeicher 55 stellt den jeweiligen Schließzeitwert bereit, der in dem betreffenden Schließzeitzähler als Vorladewert übertragen wird. Ausgehend von einem Bezugswert werden Winkelimpulse in dem Schließzeitzähler gezählt. Das Überlaufsignal ist das Schaltsignal für die Schaltung der Endstufe 13, 14 bzw. 15, so daß der Spulenstrom eingeschaltet wird. Der Spulenstrom fließt so lange, bis der folgende Schaltimpuls des Zündzählers den jeweiligen Schließzeitzähler beaufschlagt und den Spulenstrom abschaltet.

Der Spulenstrom wird in der Strommeßschaltung 11 gemessen. Die Vergleicherschaltung 42 vergleicht den Meßwert des Spulenstromes mit einem Voreinstellwert in der Einstellstufe 53. Wenn der Voreinstellwert erreicht wird, so wird der Voreinstellwert der Einstellstufe 43 um ein Inkrement zurückgestellt, andernfalls erhöht. Dementsprechend wird das Schließzeitkennfeld 47 abgefragt, so daß die Schließzeit ständig auf dem Optimalwert gehalten wird.

Das Zündsystem kann auch Stufen für die Schubabschaltung, die Drehzahlbegrenzung und weitere Funktionen enthalten, was nicht in Einzelheiten erläutert ist.

Haßler, Werner, Dr.

Patentanwalt

Asenberg 62

D-5880 Lüdenscheid (DE)

8. Januar 1987

A 86 167

Anmelderin: Atlas Fahrzeugtechnik GmbH

Eggenpfad 26

D-5980 Werdohl (DE)

## Zündsystem für einen Verbrennungsmotor

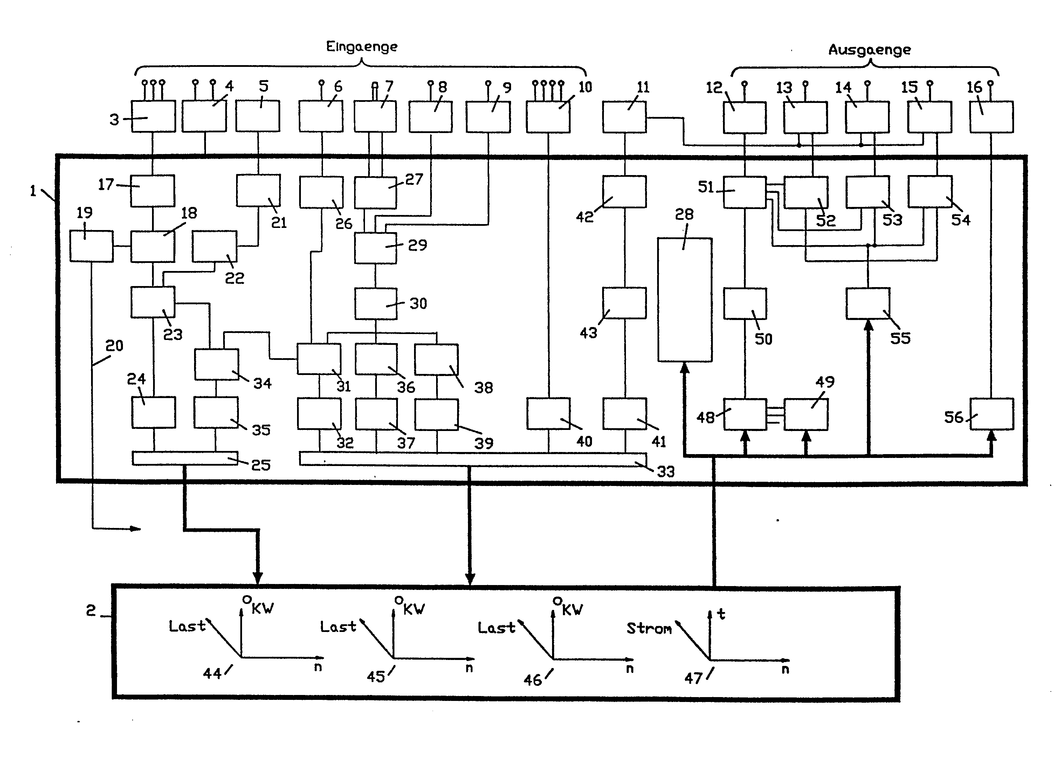

### Patentansprüche

1. Zündsystem für einen Verbrennungsmotor mit folgemdem Aufbau:

a) ein Impulsgeber erzeugt synchron mit der Kurbelwellendrehung Winkelimpulse und einen Bezugsimpuls;

b) innerhalb eines ersten Winkelabschnitts der Kurbelwellendrehung werden zur Bestimmung eines Drehzahlwertes Taktimpulse während einer Zeitbasis in einem Drehzahlzähler gezählt und gleichzeitig wird ein Lastwert in einen Mehrbitwert umgewandelt;

c) entsprechend dem Drehzahlwert und dem Lastwert wird ein Festwerte speichernder Kennfeldspeicher abgefragt;

d) in Abhängigkeit von den Speicherwerten des Kennfeldspeichers wird ein Zündzähler voreingestellt, der durch Zählung von Winkelimpulsen einen Schaltimpuls für das Zündsignal abgibt;

e) der Drehzahlwert und der Lastwert werden am Ende der Zeitbasis in Zwischenspeichern gespeichert;

f) der Kennfeldspeicher enthält Mehrbitzündwerte zur Festlegung des Zündwinkels;

g) zu einem vorgegebenen Winkelwert wird der voreinstellbare Zündzähler mit dem jeweiligen Mehrbitzündwert vorgeladen;

und gekennzeichnet durch folgende Merkmale;

h) die Winkelimpulse werden als Taktimpulse verwendet;

i) ein ebenfalls Festwerte speichernder Korrekturfeldspeicher enthält Mehrbitkorrekturwerte in Temperatur/Last/Drehzahlkennfeldern und/oder Oktan/Lastkennfeldern;

j) während eines anschließenden Korrekturwinkelabschnitts wird der Zählstand des Zündzählers durch die Mehrbitkorrekturwerte additiv oder subtraktiv korrigiert;

k) bei einem vorgegebenen Winkelwert wird der Zündzähler freigegeben, die Winkelimpulse werden bis zum Überlauf gezählt und der Überlaufimpuls löst als Schaltimpuls die Zündung aus.

2. Zündsystem nach Anspruch 1, dadurch gekennzeichnet, daß während des ersten Winkelabschnitts simultan Ansaugdruckwerte, Kühlwassertemperaturwerte und/oder Lufttemperaturwerte in Digitalwerte gewandelt und zwischengespeichert werden.

3. Zündsystem nach Anspruch 2, dadurch gekennzeichnet, daß das Korrekturkennfeld in grobem Raster temperaturabhängige und parameterabhängige Drehzahl-Lastkennfelder enthält.

4. Zündsystem nach Anspruch 2 oder 3, dadurch gekennzeichnet, daß eine Multiplexabfrage der Kennfelder erfolgt.

5. Zündsystem nach einem der Ansprüche 2 bis 4, dadurch gekennzeichnet, daß die Mehrbitkorrekturwerte während des Korrekturwinkelabschnitts vorzeichenrichtig mit hoher Frequenz in den Zündzähler eingegeben werden.

6. Zündsystem nach einem der Ansprüche 1 bis 5 für einen Motor mit Spulenzündung, dadurch gekennzeichnet, daß eine Spulenstrommeßschaltung an Eingängen eines drehzahlabhängigen Schließzeitkennfeldes anliegt und daß Mehrbitschließzeitwerte des Schließzeitkennfeldes einen Schließzeitzähler beaufschlagen.

7. Zündsystem nach Anspruch 6, dadurch gekennzeichnet, daß der Schließzeitzähler durch den Schaltimpuls vorgeladen und freigegeben wird und Winkelimpulse zählt und daß er bei Erreichen eines Überlaufwertes einen Impuls für den Spulenstrom abgibt.

Eingaenge

Ausgaenge

Last °KW n  Last °KW n  Last °KW n  Strom t n

1/1

0229643